# EUROPEAN PATENT APPLICATION

(11) **EP 1 541 457 A1**
(43) Date of publication of application: **15.06.2005**
(21) Application number: 03784650.8
(22) Date of filing: 12.08.2003
(51) Int. Cl.: B62K 23/04, F02D 11/10

(54) **ELECTRIC THROTTLE**

(30) Priority: 12.08.2002 JP 2002235069
(71) Applicant: YAMAHA HATSUDOKI KABUSHIKI KAISHA, Iwata-shi, Shizuoka 438-8501 (JP)
(72) Inventor: KOHDA, Hideo, c/o Yamaha Hatsudoki KK, Iwata-shi, Shizuoka 438-8501 (JP); OZAKI, Satoshi, Iwata-shi, Shizuoka 438-8501 (JP); NAGASE, Takeshi, Iwata-shi, Shizuoka 438-8501 (JP); HORI, Sadahiko, Iwata-shi, Shizuoka 438-8501 (JP)
(74) Representative: Grünecker, Kinkeldey, Stockmair & Schwanhäusser Anwaltssozietät
(86) International application number: PCT/JP2003/010265
(87) International publication number: WO 2004/014718

(57) **Abstract**

Provided are mechanical operation signal input means 11, which is provided on a handle 5 of a two-wheeler 1 and into which a driver can input a mechanical operation signal to control an output of an actuator for driving a wheel of the two-wheeler 1, and signal conversion means 13 to receive the input mechanical operation signal through a mechanical operation signal transmitting member 5 to convert the same into an electric control signal to output the converted electric control signal to a control unit, which controls an output of the actuator. The signal conversion means 13 is provided as a separate element in a position away from the mechanical operation signal input means 11.

## Description

### Technical Field

The present invention relates to an electric throttle to regulate an output of an actuator, such as engines, rotating electrical machines, etc., of a two-wheeler, of which a wheel is driven by the actuator, and more particular, to an electric throttle, in which an operation signal input unit, into which a driver inputs an operation signal for regulating an output of the actuator, and a control signal conversion unit to convert the input operation signal into an electric control signal to output the same to a control unit, which drivingly controls the actuator, are provided in positions away from each other.

### Background Art

Conventionally, with a throttle of a two-wheeler, of which a wheel is driven by an internal combustion engine (engine), an operation signal, which is input by a driver with the use of a lever holder unit provided on a handle, is transmitted to a carburetor of the engine through a wire cable, and a throttle valve of the carburetor is opened and closed by the operation signal transmitted to the carburetor to control an output of the engine.

The lever holder unit constitutes mechanical operation signal input means, into which a driver inputs a mechanical operation signal to control an output of an engine for driving a drive wheel of the two-wheeler. The lever holder unit is provided in a manner to cover, for example, an outer periphery of a right end of the handle, and inputs the operation signal an according to an amount of turning of a cylindrical-shaped grip, which can turn about an axis of the handle.

The wire cable is composed of a cylindrical-shaped long cover member, and a long wire conductor provided to be able to move longitudinally of the cover member. The conventional throttle transmits an operation signal, which is determined by converting the amount of turning of the grip into a moved amount of the wire conductor relative to the cover member, to the carburetor.

Also, an electric throttle is conventionally known to convert a mechanical operation signal, which is input with the use of a lever holder unit, into an electric signal to be able to control the carburetor with the converted electric signal.

With conventional electric throttles, a throttle sensor is housed in a lever holder unit. The throttle sensor exemplifies signal conversion means, which acts to convert an operation signal input from the lever holder unit, into an electric signal to be able to output the converted electric control signal to a carburetor. The throttle sensor unit and the lever holder unit are provided on one end of a handle.

There is caused a problem that a housing, in which the lever holder unit becomes large in size when the throttle sensor unit is housed in the lever holder unit as with conventional electric throttles.

In this manner, when the housing of the lever holder unit becomes large in size, the lever holder unit can obstruct a driver's view when a driver operates a two-wheeler.

In addition, the problem involved in the prior art occurs not only in an electric throttle of a two-wheeler, a wheel of which is driven by an engine but also in an electric throttle of a two-wheeler, a wheel of which is driven by an actuator such as a rotating electrical machine (for example, electric motors).

The invention has been thought of in view of the problem, and has its object to provide an electric throttle to control an output of an actuator for driving of a wheel of a two-wheeler, in which electric throttle a lever holder unit, which is provided on a handle of the two-wheeler and into which a driver inputs a mechanical operation signal for controlling of an output of the actuator, can be configured to be small.

### Disclosure of the Invention

In one aspect of the invention, there is provided an electric throttle comprising mechanical operation signal input means, which is provided on a handle of a two-wheeler and into which a driver can input a mechanical operation signal for controlling of an output of an actuator for driving a wheel of the two-wheeler, and signal conversion means to receive the input mechanical operation signal through a mechanical operation signal transmitting member to convert the received mechanical operation signal into an electric control signal to be able to output the converted electric control signal to a control unit, which controls an output of the actuator, and wherein the signal conversion means is provided in a position away from the mechanical operation signal input means.

### Brief Description of the Drawings

Fig. 1 is a view schematically showing the constitution of an entire two-wheeler according to an embodiment of the invention.
Fig. 2 is a view showing an upper portion of a handle of a two-wheeler, in which an electric throttle is provided.
Figs. 3A and 3B are views showing a cross section of a lever holder unit of the electric throttle, taken along the line III-III in Fig. 2.
Fig. 4 is a view showing a cross section of a lever holder unit of the electric throttle, the cross section being taken along the IV in Fig. 3A.
Fig. 5 is an enlarged view showing the neighborhood as viewed along an arrow V in Fig. 1, and a view showing a state, in which a throttle sensor unit of the electric throttle is provided on a main frame of the two-wheeler.
Fig. 6 is a view showing a cross section of the throttle sensor unit taken along the line VI-VI in Fig. 5.
Fig. 7 is a view showing a cross section taken along the line VII-VII in Fig. 6.
Fig. 8 is a view showing a circuit structure of a potentiometer provided in the throttle sensor unit.
Fig. 9 is a perspective view showing the schematic constitution of a cable holder member fixed to the handle.
Fig. 10 is a perspective view showing a state, in which respective cables are guided by a cable holder member fixed to the handle.
Fig. 11 is a view showing a cross section taken along the line XI-XI in Fig. 10.
Fig. 12 is a perspective view showing the schematic constitution of a conventional cable holder member 101.

### Best Mode for Carrying Out the Invention

An embodiment of the invention will be described below with reference to the drawings.

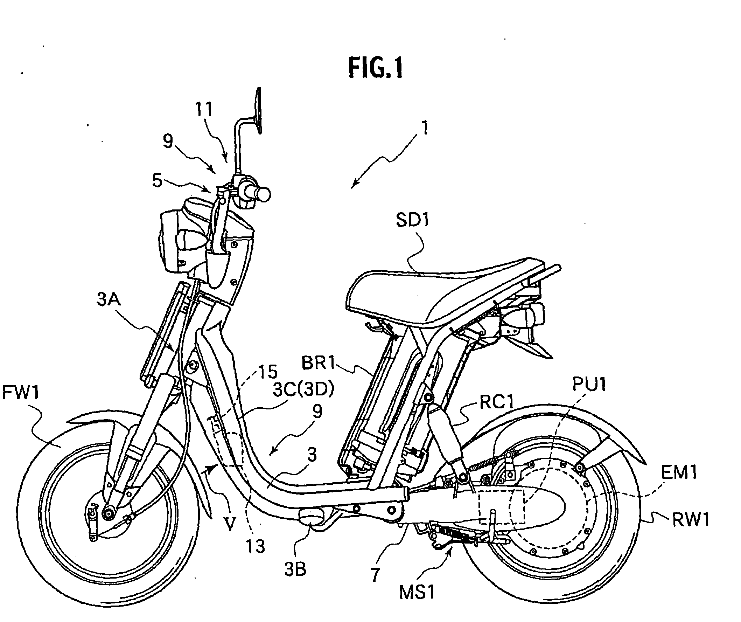

A two-wheeler 1 comprises a rotating electrical machine EM1 for driving of a rear wheel RW1, a main frame 3 to constitute a body of the two-wheeler 1, a handle 5 supported on a front end side (a left side in Fig. 1) of the main frame 3 to be able to turn relative to the main frame 3, and a front wheel FW1 supported below the handle 5 to be able to turn relative to the handle 5.

A saddle SD1 is provided above a rear end of the main frame 3 to permit a driver of the two-wheeler 1 to sit thereon. A battery BR1 being an electric source for supplying the rotating electrical machine EM1 with electricity is provided below the saddle SD1 to be supported on the main frame 3.

A rear arm 7 is pivotally (swingably) supported below a rear end of the main frame 3. The rear wheel RW1 is rotatably supported on a rear end of the rear arm 7.

Also, one end of a rear cushion RC1 is pivotally supported on a longitudinally (lengthwise of the two-wheeler) intermediate portion of the rear arm 7 on an upper side of the rear arm 7, and the other end of the rear cushion RC1 is pivotally supported on the main frame 3 below the saddle SD1.

A main stand MS1 is provided on a lower side of the two-wheeler 1 to be intermediate in a lengthwise direction of the two-wheeler 1, and used to stand up the two-wheeler 1 in a substantially horizontal state in a left and right direction when the two-wheeler 1 stops.

The rotating electrical machine EM1 functions as an electric motor when the two-wheeler 1 begins running and when the two-wheeler 1 is increased in speed (accelerated), and functions as an electric generator, which converts the kinetic energy of the two-wheeler 1 into electric energy, when the two-wheeler 1 is decelerated. In addition, when the rotating electrical machine EM1 functions as an electric generator, the electric energy generated by the rotating electrical machine EM1 is stored in the battery BR1.

Also, a power unit PU1 for drive/control of the rotating electrical machine EM1 is provided inside the rear arm 7 and closed to the rotating electrical machine EM1.

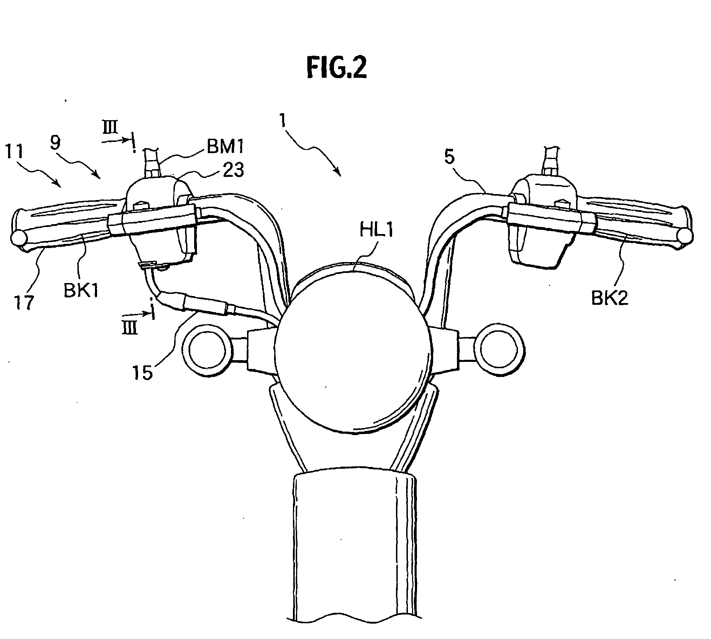

Subsequently, an electric throttle 9 provided on the two-wheeler 1 will be described with reference to Figs. 2 to 6.

The electric throttle 9 comprises a lever holder unit 11 provided on the handle 5 of the two-wheeler 1 and exemplifying mechanical operation signal input means, into which a driver can input a mechanical operation signal to control an output of an actuator (for example, the rotating electrical machine EM1) for driving a wheel (for example, the rear wheel RW1) of the two-wheeler 1, and a throttle sensor unit 13 exemplifying signal conversion means to receive the input mechanical operation signal through a wire cable 15, which exemplifies a mechanical operation signal transmitting member, to convert the received mechanical operation signal into an electric control signal to output the converted electric control signal to a control unit (for example, the power unit PU1), which controls an output of the rotating electrical machine EM1. The lever holder unit 11 and the throttle sensor unit 13 are provided on the two-wheeler 1 to be positioned away from each other.

Since the lever holder unit 11 and the throttle sensor unit 13, which constitute the electric throttle 9, are provided separately and arranged away from each other, a housing 23, which forms an outer wall of the lever holder unit 11, can be configured to be made small.

Then, by configuring the lever holder unit 11 to make the same small, the lever holder unit 11 does not block a driver's line of sight and the driver's sense of incongruity can be eliminated when the driver gets on the two-wheeler 1. Also, an outward appearance around the handle 5 of the two-wheeler 1 is improved.

As shown in Fig. 2, the lever holder unit 11 is provided on one end side of the handle 5. Also, the lever holder unit 11 is provided in a manner to cover, for example, an outer periphery of the one end side of the handle 5, and the mechanical operation signal is input according to an amount of turning of a cylindrical-shaped grip 17 capable of turning about an axis of the handle 5.

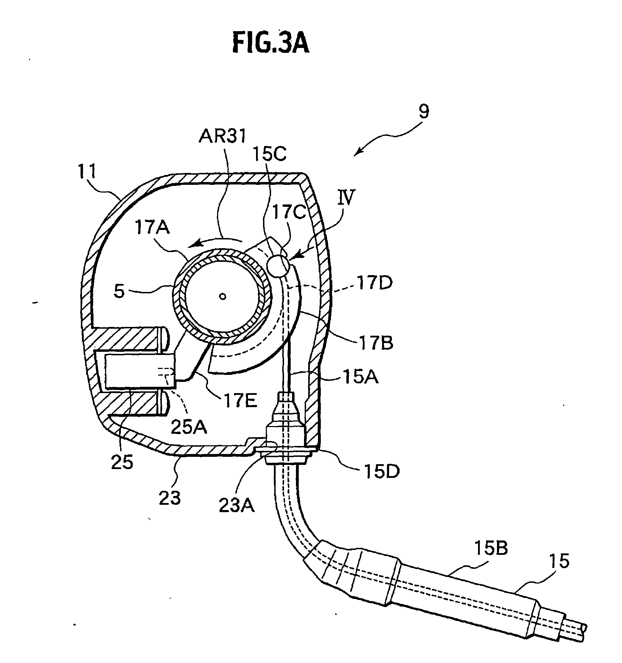

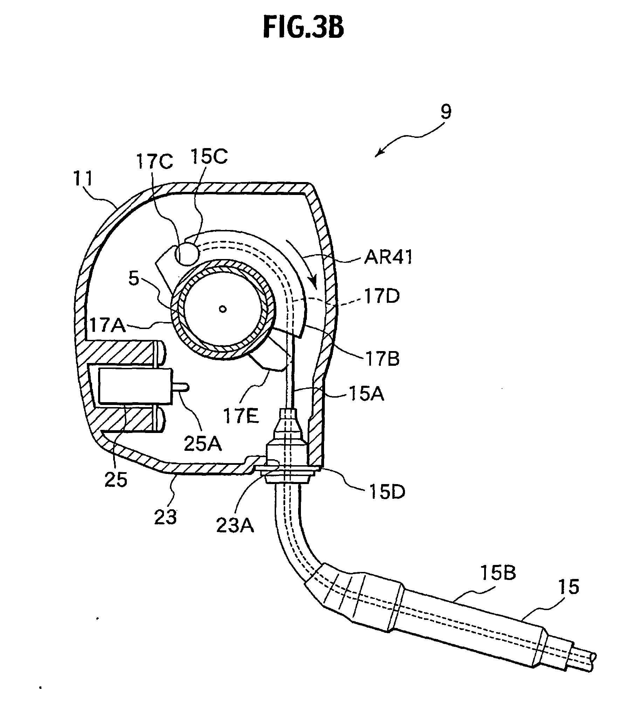

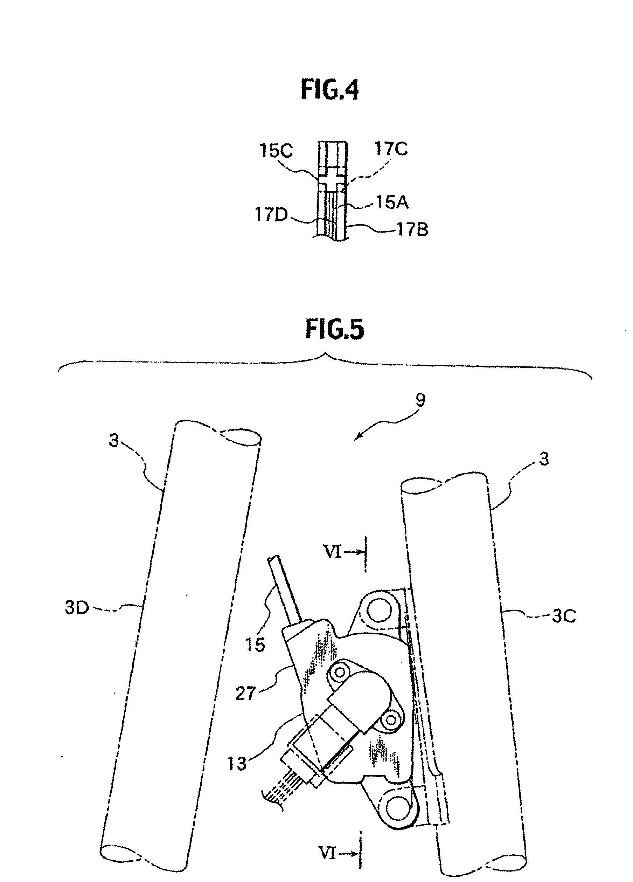

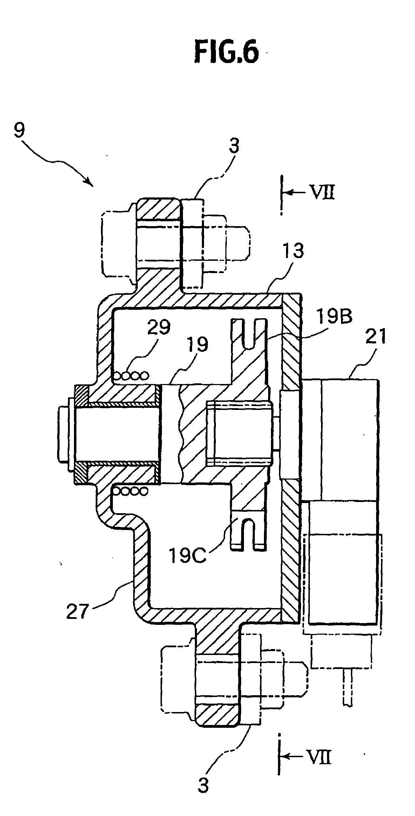

The throttle sensor unit 13 converts a mechanical operation signal into an electric control signal by converting that shift of a wire conductor 15A of the wire cable 15 relative to a cover member 15B (see Figs. 3A, 3B, and 4), which is converted from an amount of turning of the grip 17, into an amount of rotation of a rotating member 19 (see Fig. 6) provided on the throttle sensor unit 13, and reading the amount of rotation of the rotating member 19 with a rotary sensor (for example, the potentiometer 21).

Also, the throttle sensor unit 13 is provided between two down tubes 3C, 3D, which constitute the main frame 3 of the two-wheeler 1 and align in a left and right direction to extend from a handle engagement 3A for engagement with the handle 5 of the two-wheeler 1 in a turnable manner, to a foot placing portion 3B, on which the driver places feet (see Figs. 1 and 5).

The respective down tubes 3C, 3D are composed of, for example, a cylindrical-shaped pipe material. The throttle sensor unit 13 is integrally fixed to the down tube 3C (3D) by fixing a housing 27 of the throttle sensor unit 13 to one (for example, the down tube 3C) of the two down tubes 3C, 3D with the use of fastening members, such as bolts or the like.

Subsequently, the lever holder unit 11 and the throttle sensor unit 13, which constitute the electric throttle 9, will be described in detail.

As shown in Fig. 2, the lever holder unit 11 comprises the grip 17 provided on the one end side of the handle 5, and the housing 23, which is fixed to the handle 5 to cover a part of the handle to form the outer wall of the lever holder unit 11, is fixed in a position adjacent to the grip 17. The housing 23 comprises a space therein, fixes to an outside thereof a back mirror BM1 of the two-wheeler 1, and supports a front-wheel brake lever BK1.

The grip 17 is formed to be cylindrical-shaped (a hollow column), a cylindrical-shaped inner peripheral wall of the grip 17 engages with an outer peripheral wall of the handle 5 having a circular cross section in an axial direction, and the grip 17 is able to turn about an axis of the handle 5. In addition, the grip 17 is fixed by a latch member (not shown) to be immovable in an axial direction of the handle 5.

Also, as shown in Figs. 3A and 3B, one end side (an end side toward a center of the handle 5) 17A of the grip 17 extends into the housing 23.

A winding member 17B to wind the wire conductor 15A of the wire cable 15 to thereby cause the wire conductor 15A to move axially relative to the cover member 15B is integrally provided on an outer periphery of the one end side 17A of the grip 17. In addition, the winding member 17B comprises a plate-shaped member, a part of an outer periphery of which is formed to be arcuate, and a thicknesswise direction of the winding member 17B corresponds substantially to a direction of an axis of rotation of the grip 17.

A guide groove 17D is provided on an arcuate outer periphery of the winding member 17B and centrally in the thicknesswise direction of the winding member 17B to interpose and guide the wire conductor 15A of the wire cable 15 in a circumferential direction of the winding member 17B (see Fig. 4).

A conductor end holding portion 17C is formed on one end side of the guide groove 17D to hold a columnar-shaped conductor end forming member 15C, which is fixed integrally to the wire conductor 15A at one end of the wire conductor 15A.

The housing 23 is provided with a through-hole 23A, which extends inside from outside the housing. The wire conductor 15A extends up to the conductor end holding portion 17C of the winding member 17B through the through-hole 23A.

A flange 15D is provided integrally on one end side of the cover member 15B for the wire cable 15 to have an outside diameter larger than an inside diameter of the through-hole 23A of the housing 23 and to have the wire conductor 15A extending therethrough.

The flange 15D is provided integrally on an outer wall of the housing 23 in a position to cover the through-hole 23A. Accordingly, even when the winding member 17B rotates in a direction indicated by an arrow AR31 shown in Fig. 3A to wind the wire conductor 15A to pull and move the wire conductor 15A inwardly of the housing 23, the cover member 15B is not changed in position.

Also, even when the winding member 17B rotates in a direction indicated by an arrow AR41 from a state shown in Fig. 3B and thereby the wire conductor 15A having been wound by the winding member 17B is pulled by the throttle sensor unit 13 described later in detail to be moved outwardly of the housing 23, the cover member 15B cannot be moved axially of the wire cable 15.

In addition, Fig. 3A shows a state, in which the electric throttle 9 is closedmost, that is, an operation signal to permit the rotating electrical machine EM1 not to output a rotary torque is output to the throttle sensor unit 13 from the lever holder unit 11.

The throttle sensor unit 13 comprises, as shown in Fig. 6, the columnar-shaped rotating member 19 provided inside the housing 27, which forms an outer wall of the throttle sensor unit 13. The rotating member 19 engages at one end side thereof with the housing 27 to be rotatable relative to the housing 27. However, the rotating member 19 is made immovable relative to the housing 27 in an axial direction of the rotating member 19.

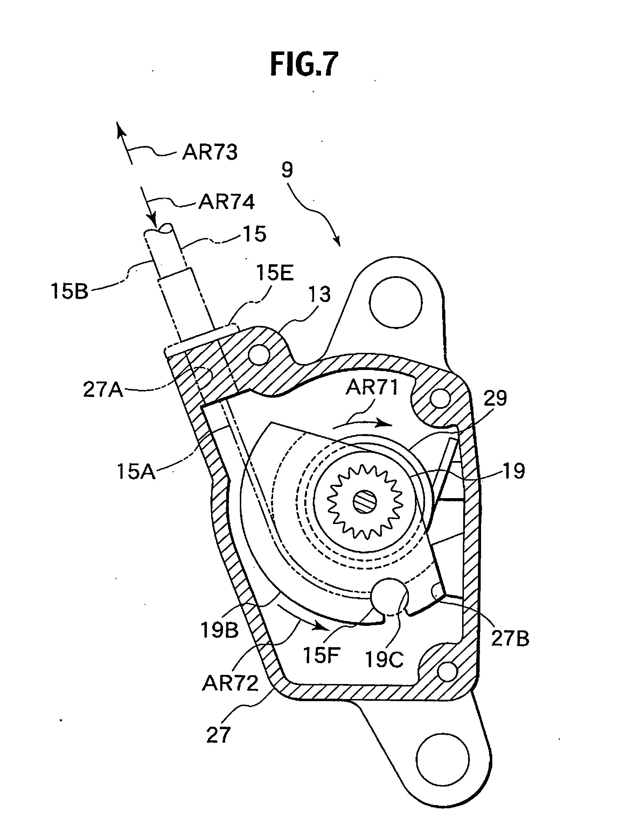

A winding member 19B is provided integrally on an outer periphery of the other end of the rotating member 19 to wind the wire conductor 15A of the wire cable 15 in substantially the same manner as the one end side 17A of the grip 17 to thereby move the wire conductor 15A axially relative to the cover member 15B. In addition, the winding member 19B is configured in substantially the same manner as the winding member 17B to be able to wind the wire conductor 15A while holding a conductor end forming member 15F (see Fig. 7) formed on the other end of the wire conductor 15A.

As shown in Fig. 7, the housing 27 is provided with a through-hole 27A, which extends inside from outside the housing 27, and the wire conductor 15A extends up to the conductor end holding portion 19C of the winding member 19B through the through-hole 27A in substantially the same manner as the case with the housing 23.

Also, like the case with the housing 23, a flange 15E is provided integrally on the other end side of the cover member 15B for the wire cable 15 to have an outside diameter larger than an inside diameter of the through-hole 27A of the housing 27 and to have the wire conductor 15A extending therethrough.

The flange 15E is provided integrally on an outer wall of the housing 27 in a position to cover the through-hole 27A. Accordingly, even when the wire conductor 15A is moved relative to the cover member 15B, the cover member 15B cannot be moved axially of the wire cable 15.

Also, the rotating member 19 is biased by a torsion coil spring 29, which is provided inside the housing 27, in a manner to rotate in a direction indicated by an arrow AR72 in Fig. 7. When the grip 17 of the lever holder unit 11 is rotated in the direction (a direction, in which the electric throttle 9 is opened) of the arrow AR31 shown in Fig. 3A and thereby the wire conductor 15A is pulled by a larger force than the bias of the torsion coil spring 29 in a direction indicated by an arrow AR73, the rotating member 19 is rotated in a direction indicated by an arrow AR71.

On the other hand, when the grip 17 of the lever holder unit 11 is rotated in the direction (a direction, in which the electric throttle 9 is closed) of the arrow AR41 shown in Fig. 3B, the rotating member 19 is rotated by the bias of the torsion coil spring 29 in the direction indicated by the arrow AR72 in Fig. 7 and the wire conductor 15A is pulled in a direction indicated by an arrow AR74.

In addition, since a stopper 27B is provided inside the housing 27 of the throttle sensor unit 13, an end surface of the winding member 19B is rotated in the direction indicated by the arrow AR72 by the torsion coil spring 29 to abut against the stopper 27B. In a state, in which the winding member 19B abuts against the stopper 27B, the rotating member 19 cannot be further rotated in the direction of the arrow AR72.

An internal gear is formed on the other end side (an opposed end side to a side of engagement with the housing 27) of the rotating member 19. The potentiometer 21 is provided on the other end side (an opposed side to a side of engagement with the rotating member 19) of the housing 27 (see Fig. 6).

In addition, a body of the potentiometer 21 is fixed integrally to the housing 27 and a rotating shaft of the potentiometer 21 extends into an inner space of the housing 27. Also, an axis of rotation of the rotating shaft of the potentiometer 21 corresponds substantially to an axis of rotation of the rotating member 19, and an external gear for engagement with the internal gear provided on the rotating member 19 is fixed integrally to the rotating shaft of the potentiometer 21, the internal gear and the external gear engaging with each other to form a coupling.

As the rotating member 19 rotates, the rotating shaft of the potentiometer 21 also rotates.

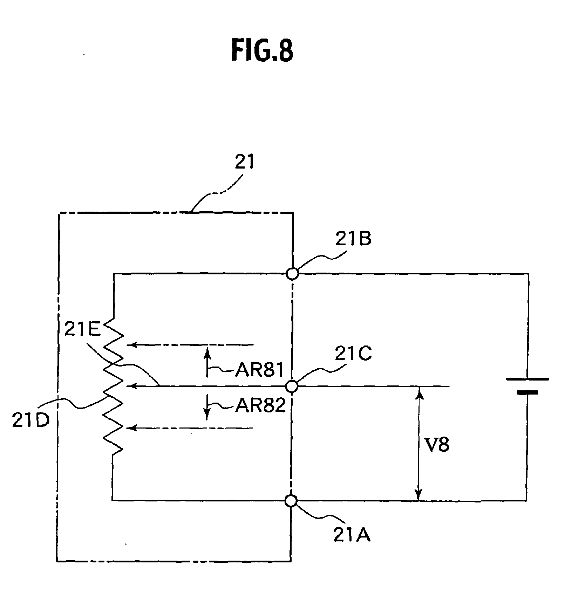

The potentiometer 21 comprises, as shown in Fig. 8, respective terminals 21A, 21B, 21C and a resistor 21D. The resistor 21D is electrically connected at one end thereof to the terminal 21A and at the other end thereof to the terminal 21B. A contact 21E is electrically connected to the resistor 21D at an intermediate portion of the resistor 21D and electrically connected to the terminal 21C. The contact 21E is shifted in a direction indicated by an arrow AR81 or an arrow AR82 to thereby enable varying a value of resistance between the terminal 21A and the terminal 21C.

Voltage generated between the terminal 21A and the terminal 21C by applying voltage (for example, direct voltage of a predetermined value) between the terminals 21A, 21B from outside the potentiometer 21 is taken out as an output voltage V8. The output voltage V8 is fed to the power unit PU1. The power unit PU1 controls the output of the rotating electrical machine EM1 according to the voltage value of the output voltage V8 fed from the potentiometer 21.

Also, when the wire conductor 15A is pulled in the direction of the arrow AR73 as shown in Fig. 7 and the rotating member 19 is rotated in the direction of the arrow AR71, the contact 21E is shifted in the direction of the arrow AR81. In this case, the value of the output voltage V8 between the terminal 21A and the terminal 21C is increased.

On the other hand, when the wire conductor 15A is moved in the direction of the arrow AR74 as shown in Fig. 7 and the rotating member 19 is rotated in the direction of the arrow AR72, the contact 21E is shifted in the direction of the arrow AR82. In this case, the value of the output voltage V8 between the terminal 21A and the terminal 21C is decreased.

With the electric throttle 9 making use of the lever holder unit 11, a driver can input the opening degree of a throttle by the use of the grip 17 and the wire cable 15 rotatably provided on the handle 5 like a conventional throttle, which controls the opening degree of a throttle valve in a carburetor of an internal combustion engine. Accordingly, it is possible to operate the electric throttle 9 in substantially the same operating method as that for conventional two-wheelers provided with a conventional throttle. Less sense of incongruity in operating the electric throttle 9 is felt even when transferring to the two-wheeler 1 according to the embodiment from a conventional two-wheeler traveling under power from an internal combustion engine provided with, for example, the conventional throttle.

Also, since the throttle sensor unit 13 is provided between the two down tubes 3C, 3D, which constitute the main frame 3 of the two-wheeler 1 and align in the left and right direction to extend from the handle engagement 3A for engagement with the handle 5 of the two-wheeler 1 in a turnable manner, to the foot placing portion 3B, on which the driver places feet, the wire cable 15 between the lever holder unit 11 and the throttle sensor unit 13 can be made shorter in length than that when the throttle sensor unit 13 is provided, for example, rearward on the main frame 3.

Further, while other units (for example, a horn), which constitute the two-wheeler 1, are provided between the two down tubes 3C, 3D, a space is unoccupied to mount therein the throttle sensor unit 13 in addition to the horn, etc. and so the throttle sensor unit 13 can be readily mounted since the space between the two down tubes 3C, 3D is configured to be large.

Also, by providing the throttle sensor unit 13 between the two down tubes 3C, 3D, the throttle sensor unit 13 becomes hard to be seen from outside the two-wheeler 1, so that an outward appearance of the two-wheeler 1 can be maintained favorable.

Also, a limit switch 25 is provided inside the housing 23, which constitutes the lever holder unit 11, separately of the operation signal input means of the lever holder unit 11 to exemplify detection means to detect the fact that a driver uses the grip 17 of the lever holder unit 11 to input an operation signal to decrease the output of the rotating electrical machine EM1, which drives the rear wheel of the two-wheeler 1 (see Figs. 3A and 3B).

When the limit switch 25 detects an operation signal (for example, a signal to render the output of the rotating electrical machine EM1 zero in a fully closed state of the electric throttle 9; a signal to put an internal combustion engine in an idling state in the case where the actuator comprises the internal combustion engine) for a decrease in output of the rotating electrical machine EM1, the limit switch 25 outputs a control signal for suppression of the output of the rotating electrical machine EM1 (for example, rendering the output of the rotating electrical machine EM1 zero) to the control unit (for example, the power unit PU1) separately of the lever holder unit 11.

That is, a knob abutting portion (dog) 17E is provided integrally on an outer periphery of the one end side 17A of the grip 17 and the knob abutting portion 17E pushes a knob 25A of the limit switch 25 in a state shown in Fig. 3 (a state, in which the electric throttle 3 is fully closed) . On the other hand, the knob abutting portion 17E is separated from the knob 25A of the limit switch 25 and the knob 25A is not pushed in a state shown in Fig. 3B (a state, in which the electric throttle 9 is not fully closed).

Here, the limit switch 25 forwards to the power unit PU1 (see Fig. 1) an electric signal indicating that, for example, the knob 25A has been pushed. Receiving an electric signal output when the knob 25A has been pushed, from the limit switch 25, the power unit PU1 renders the output of the rotating electrical machine EM1 zero in spite of a signal received from the potentiometer 21 (see Fig. 6) of the throttle sensor unit 13 (irrespective of a signal received from the potentiometer 21).

As described above, by providing the limit switch 25 on the electric throttle 9, using the limit switch 25 to detect the fact that a driver uses the lever holder unit 11 to render the output of the rotating electrical machine EM1, separately of the throttle sensor unit 13, forwarding a detection signal of the limit switch 25 to the power unit PU1, permitting the power unit PU1, which has received the results of detection, to control the rotating electrical machine EM1 so as to render the output of the rotating electrical machine EM1 zero, the electric throttle 9 can render the output of the rotating electrical machine EM1 zero even when a signal for rendering the output of the rotating electrical machine EM1 zero is not transmitted to the throttle sensor unit 13 from the lever holder unit 11 via the wire cable 15.

In addition, as the case where a signal is not transmitted to the throttle sensor unit 13 from the lever holder unit 11 via the wire cable 15, there is conceivable the case where, for example, the wire conductor 15A of the wire cable 15 gets rusty to stiffen movement of the wire conductor 15A relative to the cover member 15B and even when a driver rotates the grip 17 in the direction of the arrow AR41 from a state, in which the electric throttle 9 is opened, as shown in Fig. 3B to try to close the electric throttle 3, the wire conductor 15A will not be moved in the direction of the arrow AR41 (that is, toward the throttle sensor unit 13) and so the rotating member 19 of the throttle sensor unit 13 and the potentiometer 21 will not rotate.

Accordingly, the electric throttle 9 provided with the limit switch 25 makes it possible to render the output of the rotating electrical machine EM1 zero even when movement of the wire conductor 15A of the wire cable 15 relative to the cover member 15B becomes stiff.

In addition, while the output of the rotating electrical machine EM1 is rendered zero in the case where the knob 25A of the limit switch 25 is pushed by the knob abutting portion 17E in the embodiment described above, the output of the rotating electrical machine EM1 may be decreased (suppressed) in the case where the knob 25A of the limit switch 25 is pushed by the knob abutting portion 17E.

Also, by assuming an output value (the output voltage V8 between the terminal 21A and the terminal 21C) of the potentiometer 21, when the knob 25A of the limit switch 25 is pushed, as a value, which renders the output of the rotating electrical machine EM1, for example, zero, the power unit PU1 may drivingly control the rotating electrical machine EM1. In this case, when engaging the potentiometer 21 with the rotating member 19 in the process of assembling the throttle sensor unit 13, a rotating angle of the rotating member 19 may not be in correct agreement with a rotating angle of the output shaft of the potentiometer 21. That is, even when the internal gear of the rotating member 19 and the external gear of the output shaft of the potentiometer 21 are engaged together with the rotating angles (phase) shifted, for example, a single tooth, the power unit PU1 can correctly receive a signal, which renders the output of the rotating electrical machine EM1 zero, from the electric throttle 9. Further, a working load at the time of engagement of the potentiometer 21 with the rotating member 19 is reduced in assembling of the throttle sensor unit 13.

By the way, the front-wheel brake lever BK1, a rear-wheel brake lever BK2, the lever holder unit 11, a speedometer (not shown), a head lamp HL1, etc. (see Fig. 2) are provided on the handle 5 of the two-wheeler 1, and a wire cable, various cables (harness), etc. are extended toward the front wheel FW1, the rear wheel RW1, the throttle sensor unit 13 provided on the main frame 3, or the like from such respective equipment.

These respective cables are provided on the two-wheeler 1 in a longitudinally slack state (leaving a margin) so as not to hinder turning in the case where the handle 5 is to be turned relative to the main frame 3. That is, lengths of the respective cables are determined in a manner to allow the handle 5 to function in accordance with the specifications.

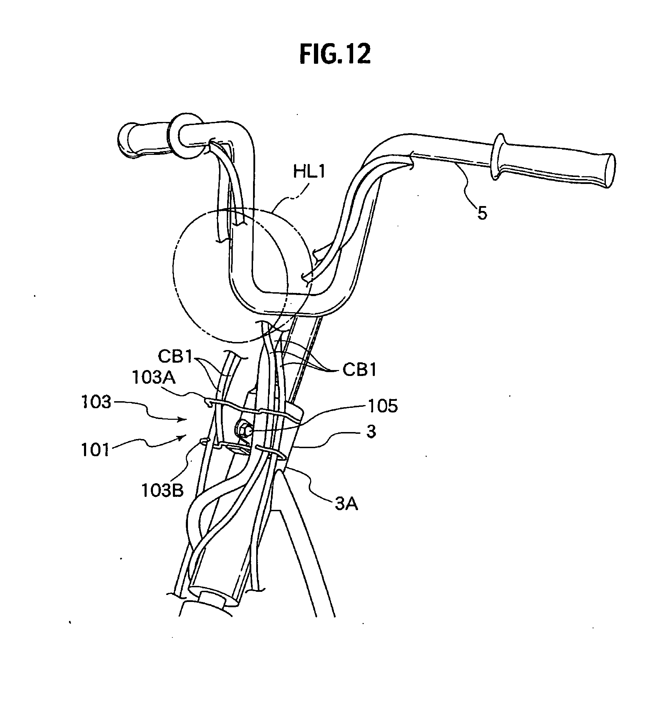

Here, when the respective cables are mounted with the longitudinal slack as described above, the respective cables are much deformed and moved vertically, laterally, and longitudinally of the two-wheeler 1 in the case where the handle 5 is turned laterally relative to the main frame 3. Therefore, a cable holder member 101 is conventionally provided on the handle 5 as shown in Fig. 12 in order to restrict movement of the cables.

The handle 5 integrally supports a base end side (upper side) of the cable holder member 101 near to an engaging portion 3A (for example, slightly above and near to the engaging portion 3A), at which the main frame 3 and the handle 5 engage with each other.

Also, restricting elements 103 to restrict swinging of the respective cables CB1 areprovidedon an intermediate portion of the cable holder member 101 to be forwardly of and away from the engaging portion 3A, at which the main frame 3 and the handle 5 engage with each other (see Fig. 12).

The restricting elements 103 comprise an appropriate number of annular portions, which are formed by annularly bending an elongate columnar member in a manner to provide an opening. And the respective cables CB1 extend substantially vertically through interiors of the annular portions. In addition, the restricting elements 103 are formed by a restricting element 103A, which comprises two annular portions extending laterally of the two-wheeler 1, and a restricting element 103B, which comprises two annular portions substantially in the same manner as the restricting element 103A, the restricting element 103A and the restricting element 103B being provided to align substantially vertically of the two-wheeler 1.

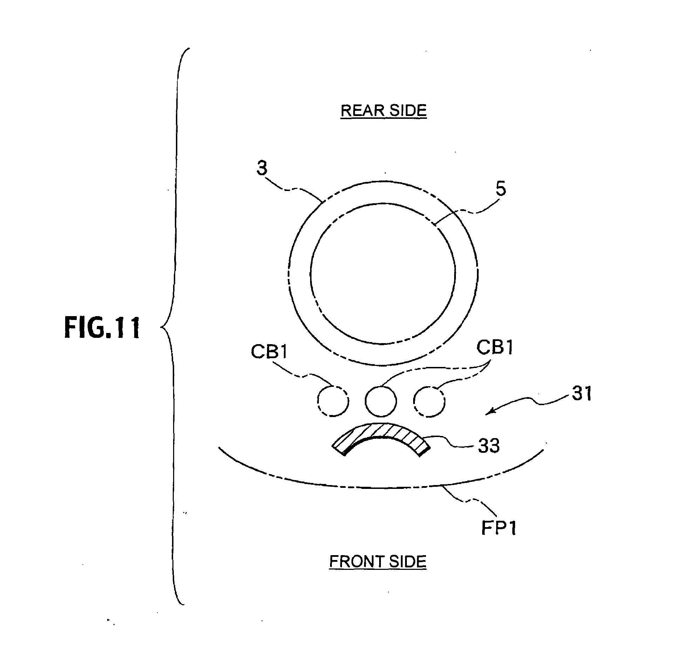

Also, provided forwardly of the cable holder member 101 is a front panel FP1 (see Fig. 11) to cover the respective cables CB1 extending between the handle 5 and the main frame 3, etc. to cover the respective cables CB1 from the front of the two-wheeler 1 to make an outward appearance of the two-wheeler 1 more attractive. In addition, the front panel FP1 is integrally fixed to the cable holder member 101 and the handle 5 by means of a latch member (see Fig. 12), such as a nut 105 or the like, provided integrally on the intermediate portion of the cable holder member 101 and a latch member (not shown) provided integrally on the handle 5.

With the conventional cable holder member 101, the respective cables CB1, etc. can come into contact with the front panel FP1 when the handle 5 is turned.

The front panel FP1 is formed of, for example, a synthetic resin for the sake of reducing the mass of the two-wheeler 1. On the other hand, since the wire cable among the respective cables CB1 includes therein a wire conductor composed of wire, it has a large stiffness, so that a force, by which the front panel FP1 is pushed, is large in case of contact with the front panel FP1 upon turning of the handle 5, and the front panel FP1 is in some cased damaged.

Hereupon, the provision of a restricting element having substantially the same shape as those of the restricting element 103A and the restricting element 103B is conceivable in addition to the respective restricting elements 103A, 103B (see Fig. 12) provided in two stages vertically of the two-wheeler 1.

When an annular restricting element is provided separately as described above, however, that extent, to which the respective cables CB1 are constrained (restricted), is increased. In this case, there is generated a need of further increasing the respective cables CB1 in length. Because of the same reason as described above, there is an increased fear that when the respective cables CB1 are further increased in length, the respective cables CB1 come into contact with the front panel FP1 to cause a damage to the front panel FP1 when the handle 5 is turned.

Also, instead of providing a new restricting element as described above, it is conceivable to provide, for example, a metallic reinforcement member on a surface on a back side (a back side when mounted on the two-wheeler 1) of the front panel FP1, and in a location where the respective cables CB1 contact.

However, the location where the respective cables CB1 contact is varied due to such a factor as slight differences in length of the respective cables CB1. Therefore, it is difficult to beforehand assume the location where the respective cables CB1 contact and to provide the metallic member in the location. Also, in order to mount the metallic member, there is a need of providing a through-hole for mounting to the front panel FP1, so that there is a fear that the through-hole makes an outward appearance of the front panel FP1 worse.

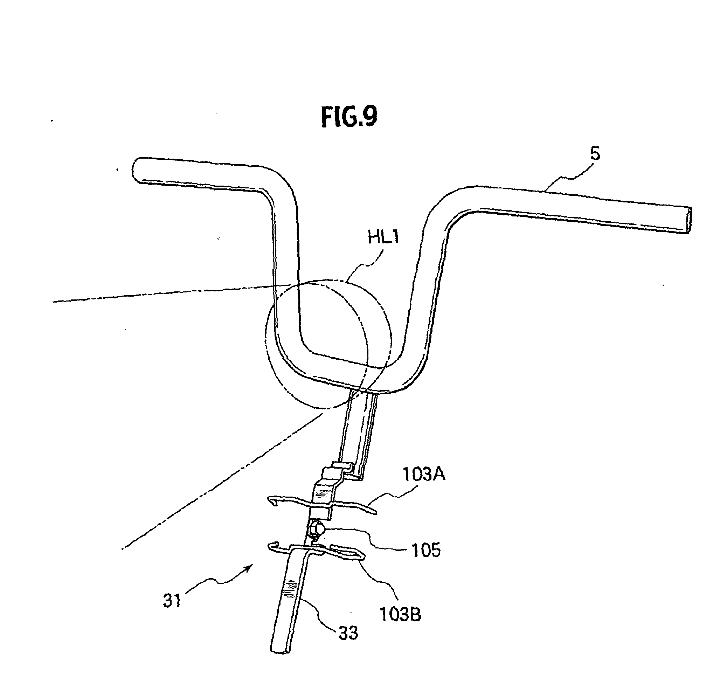

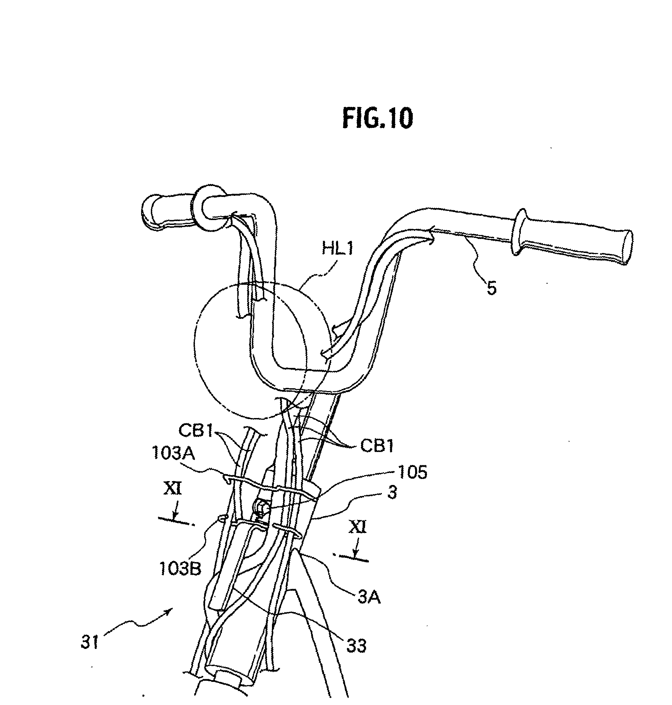

In view of the above, a cable holder member 31 shown in Figs. 9 to 11 is formed in the present application.

The cable holder member 31 is different from the cable holder member 101 in that a restricting element 33 is provided at a tip end side (lower side) thereof to be able to turn about a center of turning of the handle 5 and serves to prevent the respective cables CB1 from contacting with a cover member (for example, the front panel FP1) supported on the main frame 3, the handle 5, and the cable holder member 31, and is configured in substantially the same manner as the cable holder member 101 concerning other respects.

Here, the restricting element 33 is provided in a position in front of the engaging portion 3A of the main frame 3 in engagement with the handle 5 and away from the main frame 3 to extend lengthily from an upper side of the two-wheeler 1 to a lower side thereof. In addition, the restricting element 33 is slightly shorter in length than the engaging portion 3A of the handle 5 and the main frame 3.

Also, the restricting element 33 is composed of, for example, a metallic member and formed from sheet metal. As shown in Fig. 11, a cross section of the restricting element 33 perpendicular to a longitudinal direction thereof is formed to be convex (for example, convexly arcuate) toward the main frame 3 (rearwardly of the two-wheeler 1).

The cable holder member 31 provided with the restricting element 33 described above can restrict those movements (movements due to deformation when the handle 5 is turned) of the respective cables CB1, which cannot be restricted by the restricting elements 103A, 103B, more gently than that with the case where a restricting element similar to the restricting element 103A is separately provided for restriction. Therefore, contact of the respective cables CB1 with the front panel FP1 when the handle 5 is turned can be avoided without extending the lengths of the respective cables CB1, and so the problems with the conventional cable holder member 101 is solved.

In addition, when the restricting element 33 is formed to be convex toward the main frame 3 as described above, any edge is hard to be formed on a portion of the restricting element 33 in contact with the respective cables CB1. That is, bearing pressure on a contact portion when the restricting element 33 and the respective cables CB1 contact with each other is not increased, so that contact of the restricting element 33 with the respective cables CB1 can be prevented as far as possible from causing a damage to the restricting element 33 and the respective cables CB1.

Also, when the respective cables CB1 are held down by the restricting element 33 as well as the restricting element 103 in case of mounting the front panel FP1 to the two-wheeler 1. That is, by making the respective cables CB1 be present between the main frame 3 and the restricting element 33, it is possible to easily mount the front panel FP1 to the two-wheeler 1.

More specifically, when the respective cables CB1 having a large stiffness project to a position, in which the front panel FP1 is mounted, it is necessary to mount the front panel FP1 while deforming the respective cables CB1 thus projected, while by making the respective cables CB1 present between the main frame 3 and the restricting element 33 to prevent projection to that position, in which the front panel FP1 is mounted, it is not necessary to deform the respective cables CB1 in the work of mounting of the front panel FP1, and so it is possible to easily mount the front panel FP1 to the two-wheeler 1.

In addition, while the invention has been described mainly taking as an example the embodiment adapted to the rotating electrical machine EM1, the embodiment is also applicable to a two-wheeler, in which output of an actuator for an internal combustion engine or the like can be regulated by an electric throttle.

### Industrial Applicability

The invention produces an effect that, in an electric throttle for controlling of an output of an actuator for driving of a wheel of a two-wheeler, a lever holder unit, which is provided on a handle of the two-wheeler and into which a driver inputs a mechanical operation signal for controlling of the actuator, can be configured to be small.

## Claims

1. An electric throttle being provided on a handle of a two-wheeler and comprising mechanical operation signal input means, into which a driver of the two-wheeler can input a mechanical operation signal for controlling of an output of an actuator for driving a wheel of the two-wheeler; and
signal conversion means to receive the input mechanical operation signal through a mechanical operation signal transmitting member to convert the received mechanical operation signal into an electric control signal to output the converted electric control signal to a control unit, which controls an output of the actuator; and
wherein the signal conversion means is provided in a position away from the mechanical operation signal input means.

2. The electric throttle according to claim 1, wherein the signal conversion means is provided between two down tubes, which constitute a main frame of the two-wheeler and align in a left and right direction to extend from a handle engagement for engagement with a handle of the two-wheeler in a turnable manner, to a foot placing portion, on which the driver places feet.

3. The electric throttle according to claim 1 or 2, wherein detection means capable to detect the fact that the driver uses the mechanical operation signal inpu tmeans to input an operation signal to decrease an output of the actuator is provided separately of the mechanical operation signal input means, and when the detection means detects an operation signal to decrease an output of the actuator, the detection means outputs a control signal for suppression of an output of the actuator to the control unit separately of the mechanical operation signal input means.

4. The electric throttle according to claim 3, wherein the detection means comprises an ON/OFF switch composed of an abutting member provided integrally on an outer periphery of one end side of a grip of the handle to turn integrally with the grip, and an abutted member, with which the abutting member contacts and from which the abutting member separates according to turning of the grip.
